# EUROPEAN PATENT APPLICATION

(11) **EP 2 017 953 A2**
(43) Date of publication of application: **21.01.2009**
(21) Application number: 08011906.8
(22) Date of filing: 02.07.2008
(51) Int. Cl.: H02P 9/30

(54) **Variable speed drive system**

(30) Priority: 16.07.2007 ES 200701985
(71) Applicant: Gamesa Innovation & Technology, S.L., 31612 Sarriguren Navarra (ES)
(72) Inventor: Andresen, Björn, 8600 Silkeborg (DK)

(57) **Abstract**

The invention relates to a variable speed drive system of a wind turbine, which comprises:
- an asynchronous generator (10) with wound rotor (11), together with
- a synchronous generator (20) connected on its stator side to a frequency converter (30), the converter being connected on its other end through a slip ring unit (3) to the rotor windings of the asynchronous generator,
both the asynchronous and synchronous generators being mounted on a same single shaft (2) and constituting a single generator system (1) under a single stator housing (5).

## Description

### Field of the invention

The present invention can be used for electrical systems with all types of grids.

It relates in general to all variable speed drive systems, and more particularly to the drive system of a variable speed wind turbine.

### Background of the invention

The rotor or blades of wind turbines are directly or indirectly via a gearbox connected to an AC generator, which is in turn connected to the grid, usually by means of a step-up transformer. For example, on large wind turbines -above 100-150 kW-the voltage (tension) generated by the turbine is usually between 400 to 1000 V three-phase AC; the current is subsequently sent through the step-up transformer to raise the voltage to somewhere between 10 and 36 kV, depending on the standard in the local electrical grid.

When the AC generator is part of a variable speed wind turbine, said AC generator is connected to a power electronic converter, which in turn is directly coupled to the grid. An example of this configuration can be seen in US patent US-5083039, where a variable speed wind turbine is disclosed, having a turbine rotor that drives an AC induction generator, a power converter that converts the generator output to fixed-frequency AC power, a generator controller, and an inverter controller. However, in the wind turbine disclosed in US-5083039 the converter is directly connected to the grid, whereby higher switching harmonics are delivered to the grid, and disturbances from the grid directly affect the converter.

Also, EP-A3-1104090 discloses a method for operating a generator set. A frequency converter is used and brought to rotate with the same speed as a rotor in the generator of the windmill, thereby avoiding the use of collector rings. However, it is nearly physically impossible to rotate the whole converter system as the corresponding electronic devices are not built for such fast rotational speed; also, the high rotational/gravitation forces will in praxis limit its use. Further, the resulting machine would be enormous, besides from having a low serviceability (from the point of view of accessing e.g. the converter).

### Summary of the invention

The invention relates to a variable speed drive system of a wind turbine according to claim 1. Preferred embodiments of the variable speed drive system are defined in the dependent claims.

The invention relates to a variable speed drive system of a wind turbine, which comprises:
- an asynchronous generator with wound rotor, together with
- a synchronous generator the stator side of which is connected to a frequency converter, the converter being connected on its other end through a slip ring unit to the rotor windings of the asynchronous generator,
both the asynchronous and synchronous generators are mounted on a same single shaft and constitute a single generator system under a single stator housing.

In known configurations, e.g. the doubly-fed system or the full converter system, the converter is connected to the grid and always gets the necessary energy from the grid, and it also causes that switching harmonics are sent to the grid.

This specific construction where the converter is not directly connected to the grid solves at least some of the technical problems posed by the prior-art systems, for the following reasons:
- No higher switching harmonics are delivered to the grid, as the generator damps the switching harmonics from the converter system: the generator acts as a filter for this type of high switching harmonics.
- The converter system is better protected to failures from the grid, because there is no direct connection to the grid, and possible disturbances of the grid do not affect the converter.
   Synthesising these first reasons: there is a limited influence of the converter to the grid and vice versa.
- The whole system is built on the same generator shaft, not like the synchronous cascaded doubly-fed induction system; therefore it is more robust and compact.

According to a preferred embodiment of the invention, the synchronous generator has a rated power which is a predetermined/pre-established percentage of a rated power of the asynchronous generator. This percentage will depend on the speed range, and it may vary between 10% and 20% of the rated power of the asynchronous generator, to a maximum of 30%.

The generator system is preferably operated in sub-synchronous mode.

According to a preferred embodiment of the invention, the synchronous generator is built with permanent magnets (PMG). An advantage of this preferred embodiment is that the system may be configured to get energy from mechanical power, and can then start without any power consumption from the grid (black start capability); this feature is especially required under island operation or after a total grid black out.

Another advantage of this preferred embodiment with a PMG is that the system needs no charge circuit, because the power which is necessary to charge the DC link of the converter system can be obtained through the PMG generator part.

Usually, the converter system is charged from the grid via some resistors, and a bypass contactor is included at the start up of the converter system so as to avoid high peak currents. But according to the configuration of the present invention, the converter system can be slowly charged from the PMG part of the generator during the start up of the generator.

Some other advantages of the present invention are:
- The system works like a synchronous machine, but its speed does not depend on the grid frequency; therefore, it can work as a variable speed wind turbine or water turbine.
- The generator can work, even under low voltage conditions, because the power supply is always ensured, as the system is supplied from the synchronous machine, and thus, from the mechanical energy.
- All of the active and reactive power delivered to the grid comes from the asynchronous generator and therefore, it is easier to control (as it is further explained below).
- The system can also run shortly in over-synchronous mode; under such circumstances, the direction of active power flow on the converter will be reversed if compared to its normal operation, and therefore the system will not need a separate power consumption equipment.
- A hysteresis control can be used for controlling the rotor converter, due to the fast response time of the configuration of the present invention. The system can therefore react very fast on speed changes or changes in the electrical grid connection. Another advantage is that the hysteretic current control is able to control each phase in an independent way from the other.

For this latter case, the system further comprises a control system for the conversion system, which comprises a calculation block. From a reference peak current Î_peak, the measured rotor angle and a phase angle added to the grid frequency wt+ϕ, said calculation block is configured to carry out stator to rotor transformations and calculate a reference rotor current value Î_r, rotor frequency w_r and the phase angle δ for the asynchronous generator rotor converter system.

In this preferred embodiment the power delivered to the grid is monitored by the control system, by monitoring and controlling the stator values of the asynchronous generator.

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1 illustrates an overview of the drive system.
Figure 2 shows a more detailed view of the generator.
Figure 3 shows a schematic view of the converter system.
Figure 4 shows how active and reactive power flow in the system of the present invention.
Figure 5 shows a possible control structure for the converter system.

### Detailed description of the preferred embodiments

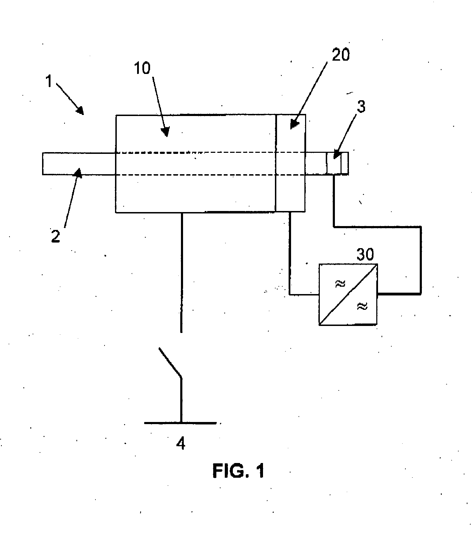

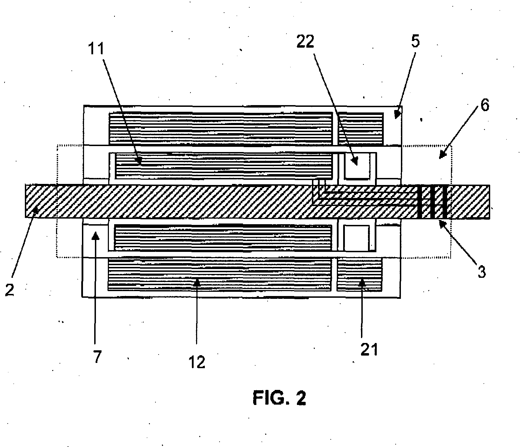

Figure 1 shows the general concept of the variable speed drive system of the present invention, and figure 2 shows a more detailed sketch of the generator 1.

As shown (figures 1 and 2), the generator 1 consists of one single housing 5 which accommodates an asynchronous machine 10 and a synchronous machine 20. The generator shaft 2 can be connected to a gearbox. On the other end of the generator, there is a slip ring unit 3 for connection of a frequency converter system 30 to the rotor 11 of the asynchronous machine. The stator 12 of the asynchronous machine part is connected to the grid 4, and the stator 21 of the synchronous machine part is connected to the frequency converter system 30.

Figure 2 shows how the single housing 5, being the fixed part of the generator, takes in both the windings of the asynchronous and synchronous machines, stator windings 12 and 21, respectively.

Regarding the rotating part of the generator or rotor 6, it comprises the permanent magnets 22 of the synchronous part 20, and the rotor windings 11 of the asynchronous machine 10.

The generator shaft is connected to rotating parts of the generator and to the: stator housing 5 (fixed parts) via the corresponding bearings 7.

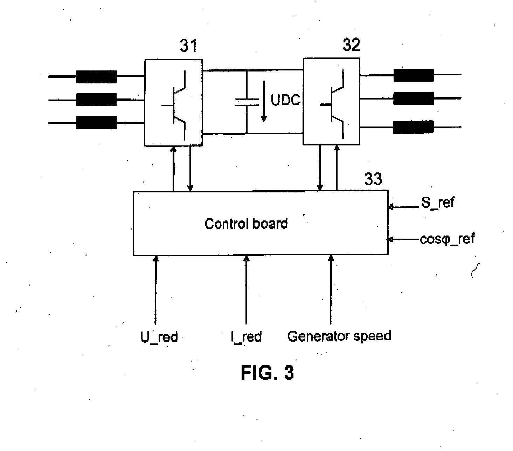

Figure 3 shows a schematic view of the converter system 30, which can be a classical voltage source back-to-back converter with a DC link and IGBTs as electronic switches.

One part of the converter, the synchronous converter 31, will control the power flow from the synchronous generator by controlling the DC link, and another part of the converter, the rotor converter 32, controls the power of the asynchronous generator.

The converter system 30 is controlled by a control board 33, some of the input variables to which are: grid voltage U_grid, grid current I_grid, generator speed, the power control reference S_ref and the power factor reference cosϕ_ref.

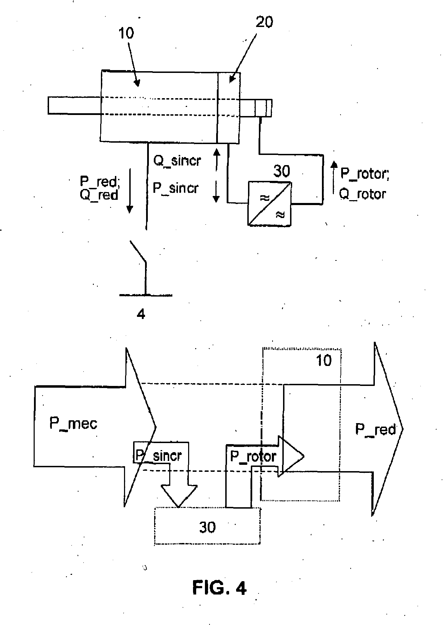

Figure 4 shows the power flow of the generator during operation.

The asynchronous machine delivers active and reactive power P_grid, Q_grid to the grid. The necessary rotor power P_rotor, Q_rotor for the asynchronous machine comes from the rotor converter via the frequency converter 30.

The power for the frequency converter is delivered by the synchronous machine P_synchr, which generates this power out of the torque (mechanical power, P_mech) input on the shaft.

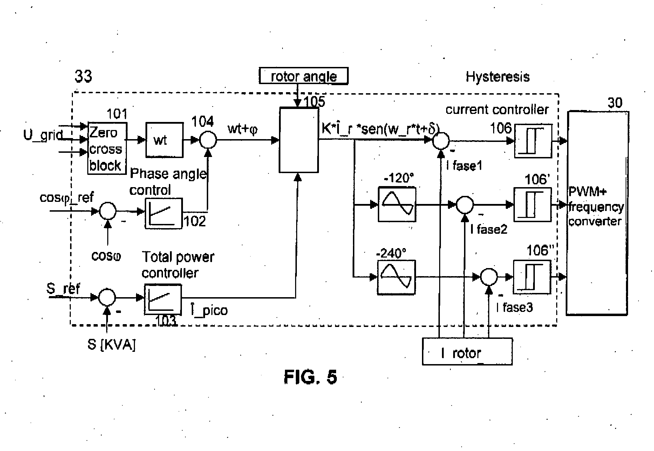

Figure 5 shows a possible control structure 33 of the converter system.

The grid voltage is an input to a zero cross block 101, in order to detect and calculate the grid frequency, by e.g. a phase-locked loop.

The phase angle control calculates out of the cosϕ reference and the actual (measured) cosϕ, the phase angle which has to be added to the grid frequency (wt+ϕ) in adder 104, which will be an input to calculation block 105.

The difference between the total reference power S_ref and the actual total power S is sent to a PI controller 103, which generates a reference current Î_peak.

This reference current Î_peak (amplitude) and the measured or estimated rotor angle (rotor position) are also inputs to the calculation block 105; from these three inputs (wt+ϕ, Î peak and rotor angle) the calculation block carries out conventional stator to rotor transformations and provides at its output: the reference rotor current, value Î_r, its frequency w_r and the phase angle δ for the converter system, which is connected to the rotor of the asynchronous generator. This transformation from stator to rotor quantities is described, for example, in "Doubly fed induction generation systems for wind turbines" by S Müller et al in IEEE Industry applns magazine, May June 2002, pp 26-33.

The K factor is representative of the relationship between stator and rotor, and furthermore includes the relation from a line current to a phase current.

There is no coordinate transformation from a three-phase system to a two-phase system, with the corresponding loss of information. The control strategy of the, present invention uses directly the measured values, transformed to rotorical values, therefore providing much more knowledge about the system.

This reference rotor current Î_r is distributed as such to one of the three rotor phases, and shifted 120° and 240° to the other two rotor phases. They are then subtracted with the measured rotor currents I_rotor, and inputted to three hysteresis current controller 106, 106' and 106", the output of which is used as input to the PWM rotor converter 107.

Thus, the control is based on a total power control and phase angle control in order to control the active and reactive power by the apparent power of the system. As an output of this control system, a reference rotor current Î_r is generated, which is in turn transmitted to three fast hysteresis current controls.

This allows a very good and stable current control loop.

As indicated before, the present invention relates to a variable speed drive system. It is to be understood that the above disclosure is an exemplification of the principles of the invention and does not limit the invention to the illustrated embodiments.

## Claims

1. Variable speed drive system of a wind turbine , which comprises:
- an asynchronous generator (10) with wound rotor (11), together with
- a synchronous generator (20) the stator of which is connected to a frequency converter (30), the converter being connected on its other end through a slip ring unit (3) to the rotor windings of the asynchronous generator,
both the asynchronous and synchronous generators being mounted on a same single shaft (2) and constituting a single generator (1) under a single stator housing (5).

2. System according to any preceding claim, wherein the synchronous generator is built with permanent magnets.

3. System according to any preceding claim **characterized in that** the generator system is operated in sub-synchronous mode.

4. System according to any of claims 2-3, wherein the system is configured to get energy from mechanical power in case of island operation or after a grid black out.

5. System according to any of claims 2-4, wherein the system acts as a storage means for mechanical energy whenever the system is operated in over-synchronous mode or there is a grid failure.

6. System according to any of claims 2-5, wherein the necessary energy to charge the converter system is obtained through the synchronous generator (20) during start up of the generator (1).

7. System according to any preceding claim, wherein the converter system is built as a voltage source converter system.

8. System according to any preceding claim, wherein the converter system is built as a current source converter.

9. System according to any preceding claim, **characterised in that** it further comprises a control system (33) for the converter system (30), which comprises a calculation block (105) which, from a reference peak current Î_peak, the measured rotor angle and a phase angle added to the grid frequency wt+ϕ, is configured to carry out stator to rotor transformations and calculate a reference rotor current value Î_r, its frequency w_r and the phase angle δ for the asynchronous generator rotor converter system.

10. System according to claim 9, wherein the control system (33) is configured to monitor stator values of the asynchronous part.
